# EUROPEAN PATENT SPECIFICATION

(11) **EP 0 503 905 B1**
(45) Date of publication and mention of the grant of the patent: **05.06.1996**
(21) Application number: 92302049.9
(22) Date of filing: 11.03.1992
(51) Int. Cl.: C04B 35/10, C04B 35/56, C04B 35/58, C04B 35/80

(54) **Ceramic materials with a warning function**
Keramische Werkstoffe mit einer Warnfunktion
Matériaux céramiques avec une fonction d'alarme

(30) Priority: 14.03.1991 JP 75661/92
(43) Date of publication of application: 16.09.1992
(73) Proprietor: NGK INSULATORS, LTD., Nagoya-shi, Aichi 467 (JP)
(72) Inventor: Sakai, Hiroaki, Nagoya 467 (JP); Kobayashi, Hiromichi, Yokkaichi-shi, Mie-ken 510 (JP)
(74) Representative: Paget, Hugh Charles Edward

(56) References cited:
- DE-A- 2 036 972
- DE-B- 1 072 182
- PATENT ABSTRACTS OF JAPAN, vol. 13, no. 182 (C- 591)(3530), 27 April 1989; & JP-A - 19841 (SUMITOMO ELECTRIC IND.) 13.01.1989
- PATENT ABSTRACTS OF JAPAN, vol. 13, no. 293 (C-615)(3641), 06 July 1989; & JP-A - 187551 (KOICHI NIIHARA) 31.03.1989

## Description

The present invention relates generally to a method of monitoring a ceramic member under stress. The ceramic member is designed to give out acoustic emission signals (hereinafter referred to as AE signals), when a given load acts on it. This ceramic member is effectively used, for example, to make parts employed under severe conditions or in high-temperature atmospheres, for instance, gas turbine blades.

Ceramic materials are hardly susceptible to plastic deformation in themselves. In other words, ceramic members break down as soon as loads acting on them increase to rupture stress. Desired to this end are some means for detecting whether excess stress has applied to ceramic members before they break down or rupture by external force.

So far, the incorporation of fibers in ceramic materials has been proposed to prevent the catastrophic fracture. According to this proposal, the fibers serve to prevent the ceramic materials from breaking down instantaneously even upon cracking.

However, a problem with such composite ceramic materials is that once they have cracked, their strengths are not high enough; in other words, their serviceabilities are so less than satisfactory as to be impractical and the reliability is not improved sufficiently.

A major object of this invention is to provide a solution to the above problem. With this invention, this object may be achieved by employing a ceramic material which generates AE signals without giving rise to any considerable lowering of strength, when an external load applied thereon reaches a given stress value lower than that at which rupture stress is to occur, thereby warning workmen of taking the required actions, such as reducing the external load or replacing the ceramic member in use with a new one. This enables the reliability of apparatus or systems with built-in ceramic members to be well kept, because they can be prevented from breaking down.

This invention provides a method of monitoring a ceramic member under stress, as set out in claim 1.

The ceramic parent material used, for instance, may be silicon nitride, silicon carbide, alumina and sialon (silicon aluminium oxynitride), and the particles to be dispersed through it, for instance, may be particulate silicon carbide and titanium boride. Although it is desired that the particulate dispersant be different in the coefficient of thermal expansion from the ceramic parent material, it may have the same coefficient of thermal expansion as the parent material, provided that it has been pretreated on its surface. The particles should preferably have a maximum particle diameter of about 5-40 µm and more preferably be in a plate form. This is because the AE signals are hard to generate when using the particles with a diameter of less than 5 µm and the strength of the ceramic member is lowered when using the particles with a diameter of more than 40 µm. And the AE signals are generated more efficiently when using the particles in a plate form.

According to this invention, the upper limit value of stress at which the ceramic member is to generate AE signals is 90 % of rupture stress, because above this value the ceramic member is much likely to rupture for lack of sufficient safety. Desirably but not exclusively, the lower limit value may be at least 10 % of the rupture stress value of the ceramic member. This is because the ceramic member is not used often at less than 10 % of the rupture stress.

Thus, preferably the AE signals (acoustic waves) are detected when a level in the range 10-90 % of rupture stress is applied thereon, allowing the ceramic material itself to give warning to a workman. For instance, if the AE signals are detected by a sound sensor such as an AE sensor, then the ceramic member in operation should be replaced with a new one. This enables the reliability of apparatus with built-in ceramic members to be well kept.

Dispersion of the specific particles through the parent material would enable the AE signals to be detected before the ceramic member ruptures for the following reason.

When the ceramic parent material differs in the coefficient of thermal expansion from the particles dispersed through it, some stress occurs in the interface of the ceramic parent material and the particles dispersed through it in the process of the temperature dropping from the sintering temperature. As this interfacial stress increases with an increase in external load, the interface begins to crack, giving out AE signals. This is also true of when the ceramic parent material has the same coefficient of thermal expansion as the particulate dispersant. In this case, however, the particulate dispersant must have been pretreated on its surface to weaken the interface bonding. Since the resulting cracks remain confined within the interface, they are unlikely to grow into too large a size to destruct the ceramic member instantaneously. Also, the crack-inducing load may be controlled by the bonding strength of the parent material to the particulate dispersant.

In what follows, this invention will be explained, by way of example alone, with reference to a number of examples and comparative examples.

### Examples 1-5

In Examples 1-3, silicon nitride, sialon and alumina were used as ceramic parent materials and plate particles of silicon carbide as a particulate dispersant. In Examples 4-5, the parent material used was silicon carbide and the particulate dispersants used were silicon carbide platelet (covered with carbon) and titanium boride, respectively. The plate particles of silicon carbide used had a maximum diameter of 15 µm and a thickness of 3 µm, and the titanium boride used had an average particle diameter of 5 µm. In Comparative Examples 1-4, the parent materials used were silicon nitride, sialon, alumina and silicon carbide with nothing dispersed through them.

Seventy (70) % by volume of the parent material was mixed with 30 % by volume of the dispersant for 24 hours by means of wet ball milling, simultaneously with the addition of a sintering aid. For the parent material of silicon nitride 3.4 % by weight of Y₂O₃ and 13.8 % by weight of Yb₂O₃ ( Ex.1 and Comp. Ex.1) were used as the sintering aid; for the parent material of sialon 0.5 % by weight of Y₂O₃ (Ex.2 and Comp. Ex.2) as the sintering aid; and for the parent material of silicon carbide 1 % by weight of B₄C and 2 % by weight of C ( Ex.4 and Comp. Ex.4) as the sintering aid. The resulting slurry was dried at 120°C for 24 hours in hot-air dryer. After that, the dried product was crushed and passed through a 149-µm sieve to obtain powders, which were then placed in a hot-pressing mold for hot pressing at a pressure of 300 kg/cm² and the respective temperatures of 1900°C, 1800°C, 1500°C and 2000°C for the parent materials of silicon nitride, sialon, alumina and silicon carbide, followed by one-hour retention. The atmospheres used were nitrogen for the parent material of silicon nitride or sialon and argon for the parent material of alumina or silicon carbide.

Cut out of the sintered compact was a test rod piece of 3x4x40 mm in size, which was then subjected to four-point bending-strength testing according to JIS-R1601. This testing was performed while an AE sensor was applied to a bending-strength jig to detect AE signals generated from the above test rod piece. The AE sensor used had a frequency characteristic of 140 kHz. The results are reported in TABLE 1.

**TABLE 1**

| | Parent Material (plus Sintering Aid) (wt%) | Particulate Dispersant | Bending Strength A (MPa) | AE Signal-Generating Load B (MPa) | B/A (%) |
|---|---|---|---|---|---|
| Ex. 1 | Silicon Nitride Y₂O₃: 3.4 Yb₂O₃13.8 | SiC Platelet | 810 | 670 | 83 |
| Ex. 2 | Sialon Y₂O₃:0.5 | SiC Platelet | 700 | 600 | 86 |
| Ex. 3 | Alumina | SiC Platelet | 630 | 550 | 87 |
| Ex. 4 | Silicon Carbide B₄C:1 C:2 | SiC Platelet covered with C | 650 | 460 | 40 |
| Ex. 5 | Silicon Carbide B₄C:1 C:2 | Titanium boride (TiB₂) | 550 | 210 | 38 |
| Comp.Ex.1 | Silicon Nitride Y₂O₃: 3.4 Yb₂O₃13.8 | - | 900 | 900 | 100 |
| Comp.Ex.2 | Sialon Y₂O₃:0.5 | - | 880 | 880 | 100 |
| Comp.Ex.3 | Alumina | - | 650 | 650 | 100 |
| Comp.Ex.4 | Silicon Carbide B₄C:1 C:2 | - | 700 | 700 | 100 |

From TABLE 1, it is understood that in all Examples 1-5 AE signals were generated under loads lower than the bending strength; all the test rod pieces showed a sign of destruction before they broke down virtually, but all the test samples according to Comparative Examples 1-4 broken down simultaneously with the detection of AE signals.

### Examples 6-19

In Examples 6-19, silicon nitride was used as a parent material and silicon carbide as a particulate dispersant. The particulate dispersants used were plate particles having a diameter of 5 µm or 10 µm or a maximum diameter of 15 µm and a thickness of 3 µm and those having a maximum diameter of 35 µm and a thickness of 5 µm. In Comparative Examples 5-8, silicon nitride was used as a parent material. However, bear in mind that particulate silicon carbide having a diameter of 0.5 µm was used as a particulate dispersant in Comparative Examples 5 and 7, but nothing was dispersed through the parent material in Comparative Examples 6 and 8. The particulate dispersants used and their amounts are shown in TABLE 2.

In TABLE 2, "Plate (commercial product 1)" refers to examples wherein commercially available plate particles of silicon carbide having a maximum diameter of 15 µm and a thickness of 3 µm were used as such, and "Plate (commercial product 2)" to examples wherein commercially available plate particles of silicon carbide having a maximum diameter of 35 µm and a thickness of 5 µm were used as such. "Plate (treated product 1)" and "Plate (treated product 2)" refer to examples wherein the commercially available plate particles of silicon carbide designated by "Plate (commercial product 1)" and "Plate (commercial product 2)", respectively, were pretreated on their surface with an acid.

In Examples 6-19 and Comparative Examples 5-8, sintered samples were prepared and subjected to four-point bending strength testing under the same conditions as described in Examples 1-5. However, note that in Examples 6-12 and Comparative Examples 5-6, sintering aids Y₂O₃ and Yb₂O₃ were used in the respective amounts of 3.4 % by weight and 13.8 % by weight with respect to the parent materials and hot pressing was performed at 1900°C; and in Examples 13-19 and Comparative Examples 7-8, sintering aids Y₂O₃, MgO and ZrO₃ were used in respective quantities of 6 % by weight, 4 % by weight and 0.3 % by weight relative to the parent materials and hot pressing was carried out at 1600°C.

The results are set out in TABLE 2.

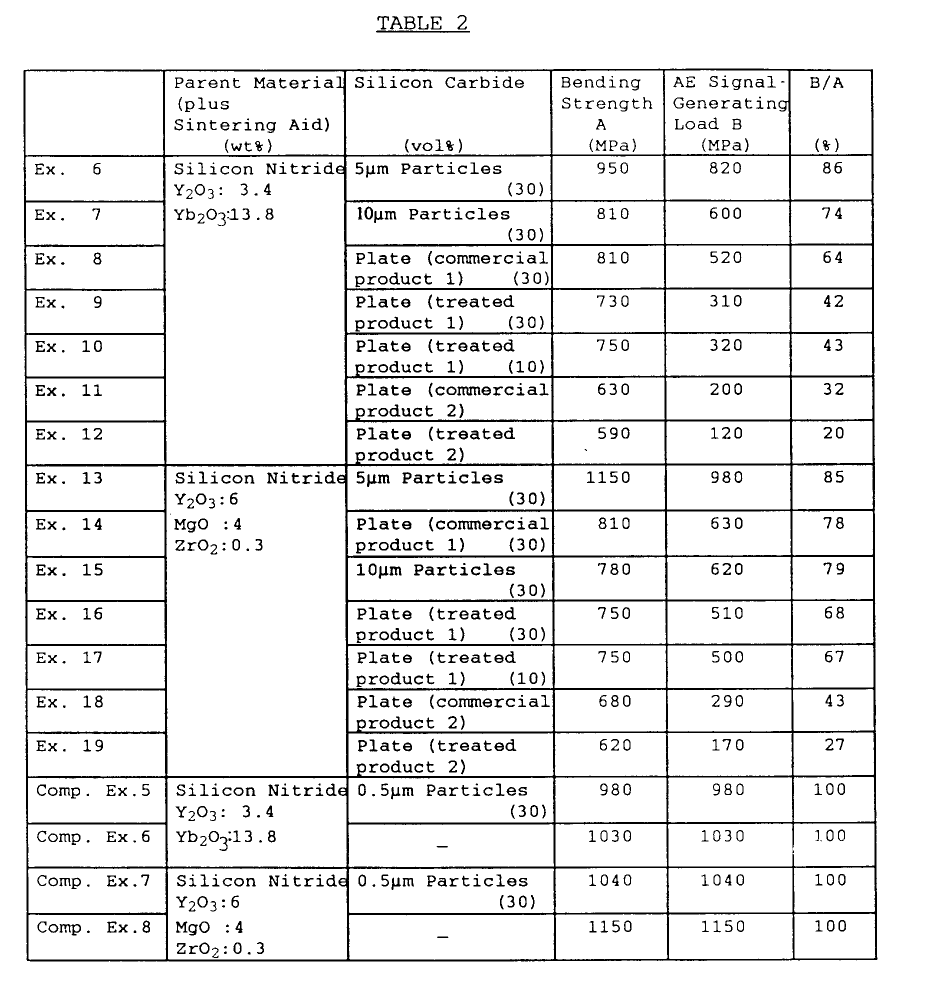

From TABLE 2, it is found that in all Examples 6-19, AE signals were detected prior to the destruction of the samples, but the samples according to Comparative Examples 5-8 all broke down simultaneously with the detection of AE signals. As can be understood from a comparison of Examples 8-9 with Examples 14 and 16, the generation of AE signals can be controlled by treating the surfaces of the particulate dispersants.

### Examples 20-23

In Examples 20-23 accounting for placing AE signal-generating load under control, preloads higher than the AE signal-generating load were applied to samples and then removed to apply a given load thereto for the purpose of detecting the generation of AE signals. In Examples 20-21 preloads of 620 MPa and 700 MPa were applied to the sample of Example 7, and in Example 22-23 preloads of 450 MPa and 550 MPa to the sample of Example 9. The obtained samples were subjected to four-point bending strength testing under the same conditions as described in Examples 1-5 to measure the AE signal-generating load. The results are set out in TABLE 3.

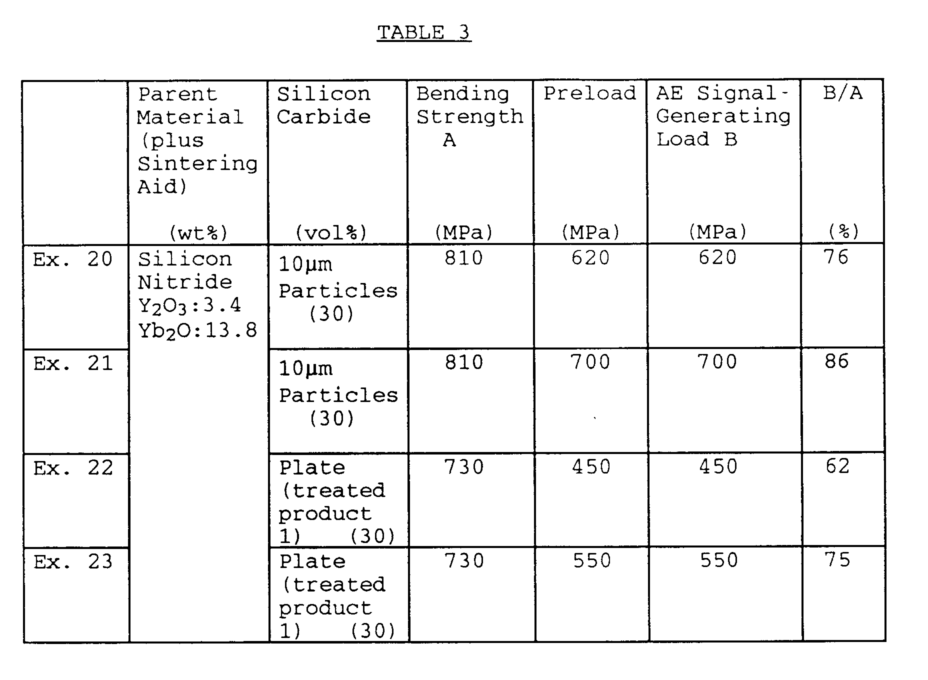

As can be understood from TABLE 3, the AE signal-generating load can be preset to a value higher than the initial AE signal-generating load value by applying a given preload to the ceramic material. As can also be appreciated from a comparison of Examples 20-23 with Examples 7 and 9, the AE signal-generating load with respect to bending strength can be preset to a value higher than the initial stress value. Thus, it is possible to place the AE signal-generating stress value under proper control by the application of a given preload to ceramic materials. As can also be known from Examples 20-23, the AE signals are generated without giving any lowering of the strength.

As described above, the ceramic material used in this invention gives out AE signals when a load applied thereon reaches a given stress value lower than the rupture stress value; that is, it has an advantage in that as an externally acting load increases, it gives a warning sign of its failure or destruction being imminent, thereby warning workmen of taking the required actions, such as reducing the external load or replacing the ceramic member in use with a new one. This enables the reliabilities of apparatus or systems with built-in ceramic members to be well kept, because they can be prevented from breaking down.

The ceramic material used in this invention can be recycled as a structural ceramic material as well, because it can give out AE signals without causing any considerable lowering of strength.

## Claims

1. A method of monitoring a ceramic member under stress, wherein the ceramic member has particles dispersed through a parent material, such that an acoustic emission signal is emitted at a stress value which is not more than 90% of rupture stress, the method comprising detecting such an acoustic signal emitted by the member by means of an acoustic emission sensor.

2. A method as claimed in claim 1, in which the acoustic signal is emitted from the member when at least 10% of rupture stress is applied thereto.

3. A method as claimed in claim 1 or claim 2, in which the particles have a different coefficient of thermal expansion from the parent material in which they are dispersed.

4. A method as claimed in claim 1 or claim 2, in which the particles have the same coefficient of thermal expansion as the parent material in which they are dispersed.

5. A method as claimed in any one of claims 1 to 4, in which the ceramic parent material is silicon nitride, silicon carbide, alumina or sialon.

6. A method as claimed in any one of claims 1 to 5, in which the particles are silicon carbide or titanium boride, and have a maximum diameter in the range of from 5 to 40 µm.

7. A method as claimed in any one of the preceding claims, in which the acoustic signal is emitted from the member without causing any considerable lowering of strength of the member.

8. A method as claimed in any one of the preceding claims, wherein the member is pre-loaded to adjust the stress at which the acoustic emission signal is generated.

## Patentansprüche

1. Verfahren zur Überwachung eines Keramikelements bzw. -glieds unter Belastung, worin das Keramikelement in einem Ausgangsmaterial dispergierte Teilchen aufweist, sodaß ein akustisches Emissionssignal bei einem Belastungswert abgegeben wird, der nicht mehr als 90% der Bruchbelastung beträgt, wobei das Verfahren das Detektieren eines solchen vom Element bzw. Glied abgegebenen akustischen Signals mit einem Sensor bzw. mittels eines Sensors für akustische Emissionen umfaßt.

2. Verfahren nach Anspruch 1, bei dem das akustische Signal vom Element abgegeben wird, wenn zumindest 10% der Bruchbelastung darauf ausgeübt wird.

3. Verfahren nach Anspruch 1 oder 2, bei dem die Teilchen einen anderen Wärmeausdehnungskoeffizienten als das Ausgangsmaterial aufweisen, in dem sie dispergiert sind.

4. Verfahren nach Anspruch 1 oder 2, bei dem die Teilchen den gleichen Wärmeausdehnungskoeffizienten wie das Ausgangsmaterial aufweisen, in dem sie dispergiert sind.

5. Verfahren nach einem der Ansprüche 1 bis 4, bei dem das Keramikausgangsmaterial Siliziumnitrid, Siliziumkarbid, Aluminiumoxid oder Sialon ist.

6. Verfahren nach einem der Ansprüche 1 bis 5, bei dem die Teilchen aus Siliziumkarbid oder Titanborid bestehen und einen maximalen Durchmesser im Bereich von 5 bis 40 µm aufweisen.

7. Verfahren nach einem der vorangegangenen Ansprüche, bei dem das akustische Signal vom Element abgegeben wird, ohne daß eine wesentliche Verringerung der Festigkeit des Elements verursacht wird.

8. Verfahren nach einem der vorangegangenen Ansprüche, bei dem das Element vorbelastet wird, um die Belastung einzustellen, bei der das akustische Emissionssignal erzeugt wird.

## Revendications

1. Méthode de surveillance d'un organe en céramique sous effort, où l'organe en céramique a des particules dispersées à travers un matériau parent de façon qu'un signal d'émission acoustique soit émis à une valeur d'effort qui n'est pas plus importante que 90% de l'effort de rupture, la méthode consistant à détecter un tel signal acoustique émis par l'organe au moyen d'un capteur d'émission acoustique.

2. Méthode selon la revendication 1 dans laquelle le signal acoustique est émis par l'organe lorsqu'au moins 10% de l'effort de rupture lui sont appliqués.

3. Méthode selon la revendication 1 ou la revendication 2 où les particules ont un coefficient de dilatation thermique différent de celui du matériau parent dans lequel elles sont dispersées.

4. Méthode selon la revendication 1 ou la revendication 2 où les particules ont le même coefficient de dilatation thermique que le matériau parent dans lequel elles sont dispersées.

5. Méthode selon l'une quelconque des revendications 1 à 4 où le matériau céramique parent est du nitrure de silicium, du carbure de silicium, de l'alumine ou du sialon.

6. Méthode selon l'une quelconque des revendications 1 à 5 où les particules sont du carbure de silicium ou du borure de titane et elles ont un diamètre maximum compris entre 5 et 40 µm.

7. Méthode selon l'une quelconque des revendications précédentes où le signal acoustique est émis par l'organe sans provoquer d'abaissement considérable de résistance de l'organe.

8. Méthode selon l'une quelconque des revendications précédentes où l'organe est préchargé pour ajuster l'effort auquel est produit le signal d'émission acoustique.
